# EUROPEAN PATENT SPECIFICATION

(11) **EP 1 962 466 B1**
(45) Date of publication and mention of the grant of the patent: **03.06.2015**
(21) Application number: 07003923.5
(22) Date of filing: 26.02.2007
(51) Int. Cl.: H04L 29/06

(54) **Method for combining a first and second ambient network**
Verfahren zur Kombination von zwei ambienten Netzen
Méthode de combinaison de deux réseaux ambiants

(43) Date of publication of application: 27.08.2008
(73) Proprietor: Nokia Solutions and Networks GmbH & Co. KG, 81541 Munich (DE)
(72) Inventor: Pollak, Christoph, 1190 Wien (AT); Postmann, Erwin, 7212 Forchtenstein (AT)
(74) Representative: Weidel, Gottfried

(56) References cited:
- WO-A-2007/000181
- SMID STEFAN: "D 5.1 SMART-draft architecture and multimedia routing decision logic"[Online] 17 February 2005 (2005-02-17), XP002435025 Retrieved from the Internet: URL:http://www.ambient-networks.org/phase1 web/publications/D5-1_PU.pdf> [retrieved on 2005-05-23]

## Description

The work leading to this invention has received funding from the European Community's Seventh Framework Programme FP7 / 2007 - 2013 under grant agreement no. 507134.

### 1. Technical Field

The invention relates to a method for combining a first and second ambient network and to ambient network architecture in general.

### 2. Background of the Invention

Ambient network is a project developing a new networking concept that embraces a very wide range of user and business scenarios and accommodates a very diverse set of current and innovative technical solutions.

The future networking scenario emphasizes two issues. Firstly, networks will become more technologically heterogeneous, accommodating old and new access systems as well as applications and services, migration and feature rollout will be a constant activity. Secondly, networks will become organisationally heterogeneous: today's cellular systems will be complemented by the diverse mixture of other network types - personal-, vehicular-, sensor-, hotspot- and more. The ambient network provides a network of networks which is able to form and reform dynamically in response to changing conditions.

In order to handle the problem of the heterogeneous naming and addressing schemes in use in the different sub-networks, one of the key concepts of the ambient network technology is the ambient layer model defining the upper and lower boundaries of the network in functionality.

The ambient layer model provides detailed specifications for a pair of interlayer interfaces. At the upper boundary, the Ambient Server Interface (ASI) provides uniform access to the ambient networks functionality from higher layers. A bearer abstraction level has been developed to represent end to end communications services. Bearer capabilities range from simple data transfer to special purpose media handling. The ambient service interface and bearer abstractions are key enablers for universal deployment of new services and applications and for the transparent and incremental employment of added value network functionality to support them.

At the lower boundary, the ambient resource interface (ARI) encapsulates the capabilities of the underlying infrastructure, and the flow level abstraction provides in the basic building block of the data transfer between addresses. Because these abstractions are not tied to any specific network technology, the ambient network control functions are portable between different network types. This decoupling enables a simple migration path from current systems to the ambient networks approach.

On top of the ambient service interface ASI, application sessions may be defined by individual network nodes, wherein the sessions combine one or multiple bearers into custom transport entities. For example, an application could decide to request different bearers for data (e.g. file sharing or an FTP transfer), voice and video data transferred to a peer application, according to the different Quality of Service (QoS) required for each of the bearers. To illustrate that these bearers are related, the term "session" or "media session" is used.

It is noted that according to the current ambient network architecture, the session is an application defined object that is outside the scope of ambient networks. The Ambient Control Space does not maintain any session IDs or similar.

Moreover, a media client is defined in this context to be a logical entity that forms an end point of the delivery network receiving the media content in a session. It provides media interface between user applications and the media routing and transport overlaying network. The known example for an architecture and multimedia routing decision logic adapted to the application in ambient networks is the so called SMART architecture as described in the document number IST-2002-507134-AN/WP5/D01 "SMART-draft architecture and multimedia routing decision logic" of the European Union project "Information Society Technologies". According to the SMART architecture, sessions correspond to a service specific overlay network (SSON) which requires well defined media client and media service upon its initialisation.

However, in a scenario where a user has several multimedia sessions (e.g. video, audio, chat, messaging, web browsing) running at his ambient network-enabled mobile terminal (e.g. PDA, laptop) because he is involved in a video/audio call using in addition the instant messaging/chat application for information exchange and browses in the internet at his office, the SMART architecture may under some circumstances not lead to optimal results.

If, for example, the user mentioned above moves into a meeting room where new media clients such as a TV set, a beamer, a PC, loudspeakers etc. are present, it would be desirable to re-direct at least a part of the data flow of one or more sessions to other media clients. For example, the video data relating to the video conference could be redirected to the TV set and the audio data relating to the video conference could be redirected to the loudspeakers in the conference room or to the loudspeakers of the TV set. Moreover, the internet session could be automatically redirected to the personal computer in the conference room.

In addition to redirecting the output of a session, under certain circumstances, it would be desirable to automatically exchange input interfaces of the user, e.g. the input of the chat session might be redirected to the keyboard of the personal computer or a video camera fixedly installed in the conference room might be used for the video conference.

However, the above automatic re-directing is not possible within the scope of the ambient network architecture as currently defined, since the network composition and negotiation is strictly independent from the sessions running on clients or nodes on the individual ambient networks to be combined.

WO 2007/000181 A discloses a method for combining a first and second ambient network wherein network composition negotiation information is exchanged between the first and second ambient network, comprising the steps of: automatically detecting a link between the first and second ambient networks, establishing a connectivity interface between the ambient networks across the detected links, sending the network composition negotiation information containing information on at least one media session involving a media client across the established connectivity interface.

### 3. Summary of the Invention

The object of the invention is to modify a network composition procedure for combining a first and a second ambient network in a way that an automatically direction and re-configuration of input and output interfaces of a media session can be performed or offered upon network composition. Moreover, an ambient network device is sought to be modified in a way that it becomes capable of performing the amended method of network composition.

The above objects are achieved by a method for combining a first and a second ambient network according to claim 1 and by an ambient network device according to claim 21.

The invention starts from a method for combining a first and a second ambient network wherein network composition negotiation information is exchanged between the first and the second ambient network.

It is proposed that the network composition negotiation information contains information relating to at least one media session involving a first media client in a first one of the ambient networks. The information relating to the media session may be used for an adaption of the session definition to the changed network configuration such that the session endpoints or the bearer endpoints of the bearers belonging to the session may be reconfigured. The term "session endpoint" refers to a bearer endpoint of a bearer belonging to the session concerned.

Hereinafter, the term "ambient network" is defined as a set of one or more nodes and/or devices which share a common control plane called the ambient control space. Well defined access to the ambient control spaces provided to users or other ambient networks through external interfaces, in particular the Ambient Network Interface (ANI) for horizontal interaction between (sub-)networks and the Ambient Service Interface (ASI) and Ambient Resource Interface (ARI) for vertical interaction between a user and the network and between the network and network resources such as printers etc..

An ambient network has one or more globally unique identities identifying the ambient network similar to an address. By the identity, the ambient Network can be contacted and it shall be able to compose with other ambient networks. In particular, a single device or node such as a mobile terminal (e.g. PDA, laptop) is defined as an ambient network in the above sense. The above network composition negotiation information is exchanged via an ambient network interface (ANI) which has to be modified according to the invention.

In order to achieve a favourable reconfiguration of the input/output devices used by the media session it is proposed that the information relating to the at least one media session comprises information on input and/or output requirements of the media session.

In order to achieve an automated redirection, it is proposed that at least a part of the data flow of a media session is redirected from the media client of the first ambient network to a media client of the second ambient network upon agreement on the network composition between the ambient networks.

In a semi-automated version of the method according to the invention, a user might be asked whether or not the corresponding part of the data flow of the media session is to be redirected. Alternatively, the redirection could be performed according to stored preference values of the user where information on which reconfiguration or redirection should be performed under which circumstances is stored. The preference values could be comfortably set by using templates.

In particular, it is proposed that an end point of a media data flow is transferred. The media data flow in the above sense comprises not only data being transmitted from a media server to a media client but also user input data stemming from a terminal device or input interface. Transferring the endpoint of an input data flow would correspond to exchanging the input device to be used.

In a particularly favourable embodiment of the invention it is proposed that a control part of the media session is split from a bearer handling part for handling bearers of the media session. In the above example, this would correspond to keeping the control of the session on the portable terminal of the user entering the conference room whereas, for example, the video data flow of the video conference session is redirected to e.g. the beamer or the to TV set. One advantage of the splitting of the control part of the media session from the bearer handling part for handling the bearers of the media session is that the control parts of several multimedia sessions may be kept on one network node such that no confusion may arise on which session is to be controlled using which network node or input device. The control of several media session could even be combined in a single graphical user interface.

If at least one bearer endpoint of the media session is split from a session endpoint of the media session, a flexible definition of the session involving more than one session endpoints or media clients as possible. The conventional identity between session endpoint and bearer endpoint may be overcome and a session definition allows a variable number of session endpoints to be used.

If the network composition negotiation information contains the information on the transfer of at least one bearer of the media session the redirection/reconfiguration can be performed immediately on the bearer abstraction level and no translation and retranslation between the bearer abstraction level and the session abstraction level is necessary.

If the network composition negotiation information contains information on which of the ambient networks will be a master network and which node shall take the control for the redirection of the media session, contradictory commands relating to the control of the session may be avoided.

If the network composition negotiation information contains information on which nodes of at least one of the ambient networks will automatically accept a part of the media session, a step of offering the acceptance of a part of the media session may be avoided and the network composition negotiation may be further accelerated.

If individual interfaces, e.g. socket interfaces, are provided for each node automatically accepting a part of the media session, the session control may be performed in a simple and flexible way.

If the method according to the invention is characterized in that the media session is a multimedia session containing several sub-sessions, wherein each of the sub-sessions is controlled through an individual interface, e.g. a socket interface, the benefit of the automated reconfiguration and redistribution of the session tasks is particularly great. Sub-Sessions could be single-media sessions of the multi-media session, e.g. a video-subsession and an audio-subsession of a video conference session.

If a user interface for controlling the media session remains in the first ambient network, a confusion on which user interface has to be used may be avoided.

According to a further embodiment of the invention, it is proposed that an interface - which may e.g. be formed as a socket interface - is established between the transferred part of the data flow of the media session and the part of the media session remaining on the first ambient network. The interface, e.g. the socket interface may for example be an open application programming interface (API) in order to provide a simple communication between the two parts of the media session.

The security requirements may be adapted to the specific case if the network composition negotiation information contains information on how the data transmitted via the interface, e.g. the socket interface, are to be protected. In particular, a suitable encryption scheme may be negotiated.

If the network composition negotiation information contains information on the compensation for traffic handling, the method according to the invention may be included into a suitable business scheme.

Moreover, it is proposed that the method according to the invention redirects the transferred part of the media session to the media client of the first ambient network upon request by the fist ambient network. Thus, it can be achieved that upon decomposition of the networks or upon a change of the circumstances of the media session is running in, the redirection of the part of the data flow of the media session may be reversed.

In order to take advantage of a high quality audio client in the second ambient network, it is proposed that an audio data stream of the media session is transferred to the audio client of the second ambient network.

In order to take advantage of a high quality video client of the second ambient network, it is proposed that a video data stream of the media session is transferred to the video client of the second ambient network.

Moreover, if the method according to the invention is characterized in that the transferral of at least one function for managing network connections is negotiated in the same composition agreement as the transferral of the part of the multimedia session, the control of the media session may be transferred to a more comfortable command interface if desired.

Furthermore it is proposed that the method according to the invention comprises the steps of: automatically detecting a link between the first and second ambient networks, establishing a connectivity interface between ambient network via the detected link and sending the network composition negotiation information containing the information relating to the at least one media session across the established connectivity interface, wherein the media session involves the media client. If the method is structured in the above way, especially in the step of automatically detecting the link and of establishing a connectivity interface between the ambient networks across the detected link, well tested and elaborate algorithms known from conventional ambient network technology may be used.

In order to modify an ambient network device in the sense of the invention, the invention starts from an ambient network device comprising a processor controlling the link for combining the first and second ambient network and controlling the link for exchanging network composition negotiation information between the first and the second ambient network.

It is proposed that the means for exchanging network composition negotiation information acquires a transmitted network composition negotiation information containing information on at least one media session involving a input/output device or media client in the first one of the ambient networks. The exchange of information on the media client or the input/output device of the media session enables an automatically configuration/redefinition of the media session in order to adapt the latter to the reconfiguration of the underlying ambient network and to the newly accessable ambient network resources such as input/output devices. The benefit of the ambient network device according to the invention is particularly great if the media client is comprised in the ambient network device itself.

Since input/output devices of portable devices are often of lower quality than input/output devices of an ambient network the portable device is entering, the invention is particularly fruitful if the first ambient network device is a portable device.

### 3. Brief Description of the Drawings

The effects and advantages of the invention will become more apparent from the following description of the attached drawings. The description, the drawings and the claims disclose a multitude of features in combination, which features will also be regarded individually by the skilled person. The skilled person will device further combinations of the disclosed features being adapted to specific purposes.

Figure 1 shows a first and a second ambient network prior to network composition.

Figure 2 shows a combined ambient network according to a first embodiment of the invention.

Figure 3 shows a combined ambient network according to a second embodiment of the invention where a media data flow is split from a control part of the session.

Figure 4 shows a third embodiment of the invention where media data flow and control of the multimedia session is split.

Figure 5 shows protocol stack of a media network without media split.

Figure 6 shows protocol stack of a media network with media split.

### 4. Detailed Description of the Embodiments

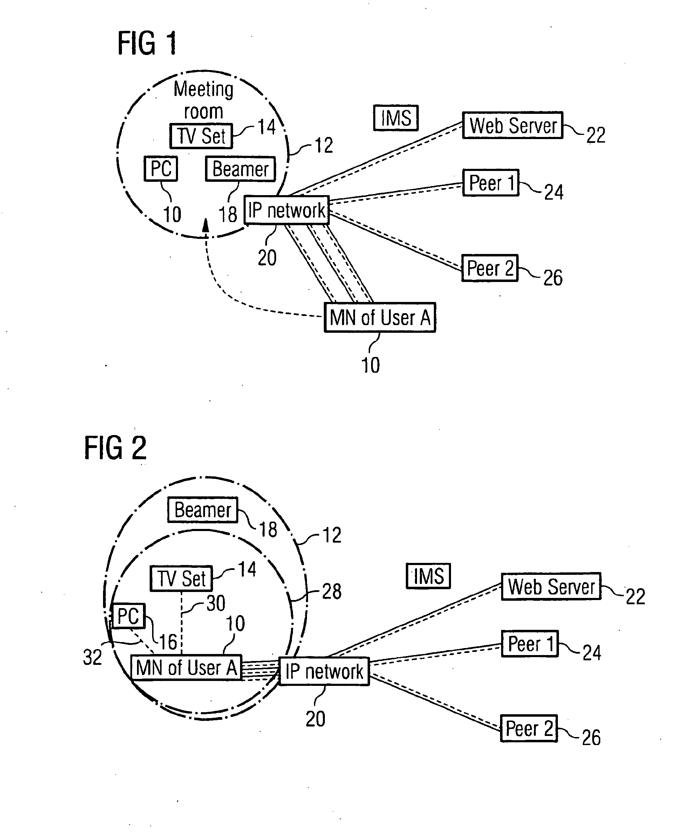

In the following, the invention is described with reference to an example where a user carrying an ambient network-enabled portable mobile terminal representing a mobile node 10 being or being a part of a first ambient network enters a meeting room 12. The meeting room is comprised of a second ambient network and is provided with a TV set 14, a personal computer 16 and a beamer 18. The mobile node 10 of the user is comprised of a first ambient network including an IT network 20, a web server 22, and nodes of a first peer 24 and a second peer 26. Upon entering the meeting room 12, the mobile node 10 of the user starts exchanging composition negotiation information between the first and the second ambient network. Figure 1 shows the first and the second ambient network prior to composition.

The composition negotiation as such is preceded by automatically detecting a link between the first and the second ambient network. In the above example, the link might be a wireless LAN based on a router (not shown) being disposed in the meeting room 12. If the links between the first and the second ambient network have been identified, a connectivity interface between the ambient networks is established across the detected links. The connectivity interface might be configured similarly to conventional ambient network interfaces.

After having established the connectivity interface, the above mentioned network composition negotiation information is exchanged between the first ambient network and the second ambient network in order to generate a combined ambient network 28 (Fig. 2).

According to the invention, the network composition negotiation information contains information on lower layer transport protocols such as message transport with different security requirements and information on higher layer signalling application protocols enabling diverse procedures and information exchanges required by the different ambient network functional entities. Lower layer transport protocols comprise the connectivity level, the flow abstraction level and the bearer abstraction level transport protocols.

The goal of the composition procedures is to enable networks to cooperate automatically. This implies that the establishment of the composition is done "on the fly", thus speeding up the process of negotiating the details and conditions of a cooperation. The agreement made between two networks doing the network composition procedure is called the composition agreement.

The wide scope of a composition agreement implies that a huge number of parameters relating to various adoptions need to be agreed upon. Negotiating all these parameters and values could end up in a lengthy process. This conflicts with the idea to negotiate composition agreements "on the fly". Therefore, the composition negotiations are largely done in advance by using composition templates. A composition template predefines parameters, values and options for a composition agreement. By using an applicable composition template in a composition process, the players involved greatly reduce the amount of negotiation needed.

In the above embodiment, the composition negotiation information or the composition template comprises information relating to the media sessions involving input/output devices in both of the ambient networks to be combined.

Figure 2 shows the combined ambient network 28 resulting from successful network composition negotiations. Via the ambient resource interface (ARI) of the combined ambient network 28, the mobile node 10 of the user is provided with ambient network signalling connections 30, 32 allowing it to use the additional network resources of the combined ambient network 28 namely the TV set 14 and the personal computer 16 in newly started applications.

However, as shown in Figure 1, the entering user had already some media sessions running prior to entering the meeting room. Mainly, video or audio communication sessions with the nodes 24, 26 of the first and second peer, a web browsing session with the web server 22 or a chat session with one of the nodes 24, 26 of one of the peers.

In the Figures 1 to 4, bearers transporting user data are indicated with bold dashed lines and bearers transporting signalling data are indicated with continuous lines. Each session in the above illustrative example comprises two bearers, namely the bearer transporting user data and the bearer establishing the signalling connection for the session control.

In the embodiment shown in Figure 2, the session and bearer endpoints of the sessions already running prior to the network composition remain on the mobile node 10 of the user. Figure 2 corresponds to a situation where negotiation of a redirection of a part of the dataflow of the sessions has not been successful on the one hand and corresponds to the situation resulting from a ambient network composition according to the prior art on the other hand.

The information relating to the media sessions comprises for each media session informations on the input/output requirements of the media session. For example, the information relating to the web browsing session connecting the mobile node 10 of the user with the web server 22 comprises the information that the web browsing session requires input terminal such as a keyboard, a mouse or a touchpad and an output device such as a monitor. The information relating to the video conference session with the node 24 of the first peer contains information on input requirements such as a microphone and a camera and an output requirement such as a monitor or screen and an audio output device such as head phones our a loudspeaker system.

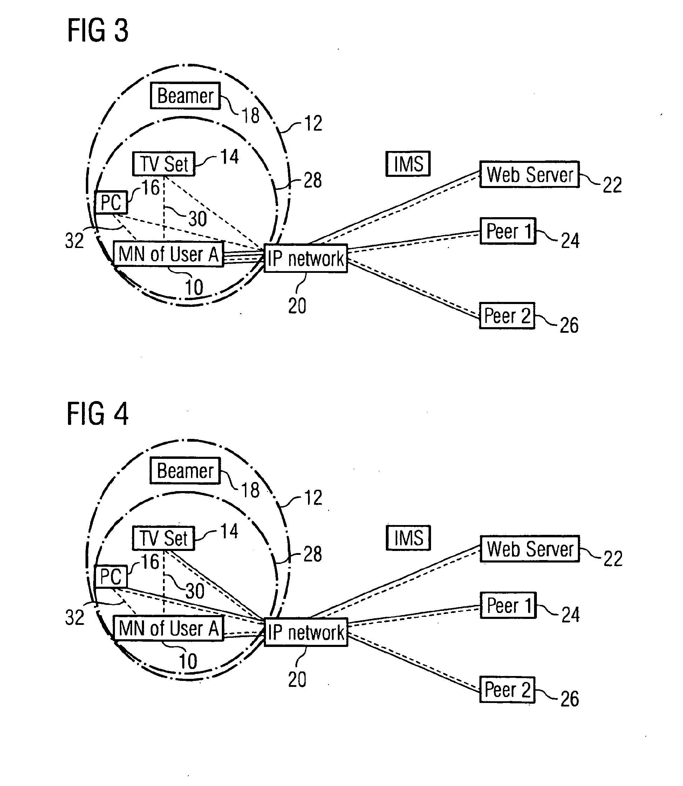

Figure 3 shows an embodiment of the invention where as a result of a successful network composition negotiation a part of the data flow of a media session is redirected from a media client of the first ambient network to a media client of the second ambient network upon agreement on the network composition between the ambient networks.

In particular, the video data flow and audio data flow relating to the video conference with the node 24 of peer 1 has been redirected to the TV set 14 in the meeting room 12 and the data output of the web browsing session has been redirected to the personal computer 16 which then becomes a media client of the web server 22. The media clients of the mobile node 10, namely the screen and the audio output of the mobile node 10 are replaced by the screens of the personal computer 16 and the TV set 14 and by the speakers of the TV set 14, respectively.

The redirection of the data flows according to the above agreement corresponds to transferring an endpoint of a media data flow. However, the endpoints of the bearers relating to the session control being represented as solid lines in Figure 3 remain on the mobile node 10 of the user such that the control part of the media session is split from a bearer handling part for handling the bearer of the multimedia session. The bearer handling could, for example, be performed by the IP network 20.

Since the control of the media session remains on the mobile node 10 of the user, the bearer endpoints relating to the bearers carrying the video and audio data flow is split from the session endpoint of the media session.

During the composition negotiation, information has been exchanged on which of the ambient networks will be a master network for the redirection control of the media session. In the above case, the mobile node 10 of the user has remained the master network for the redirection control of the media session. In particular, the bearer handling being performed by e.g. the IP network 20 can be controlled via the mobile node 10.

It is noted that in the scope of the ambient network technology, the difference between network and end system disappears. Traditionally, users own terminals which they attach to an access network. However, increasingly users own or participate in entire networks (e.g. Personal Ambient Networks PAN) which they attach to access networks or even attach to each other. The PAN might e.g. include a mobile phone being connected to a handheld computer and to a provider. The procedure should not depend on whether a single terminal or an entire network is attaching. Therefore, from an ambient network perspective, single terminals and networks are treated identical. They all are "ambient networks". The consequence of this is that the User Network Interface (UNI) is identical to the Network Network Interface (NNI): both become the Ambient Network Interface (ANI) exchanging network composition negotiation information.

In the above example, the network composition negotiation information contains information on which nodes of the second ambient network based in the meeting room 12 will automatically accept a part of the media session. In the above example, the second ambient network of the meeting room 12 provided the information that the TV set 14 and the personal computer 16 would automatically accept a part of the media session, namely the bearer endpoint relating to audio data flow and video data flow.

Each of the nodes accepting a part of the media session automatically is provided with an individual socket interface such as an API in order to allow a control of the distributed media session.

In the above example, e.g. the video conference session is a multimedia session containing several sub-sessions, namely one sub-session relating to the audio data flow and one sub-session relating to a video data flow and the individual sub-sessions may be controlled through individual socket interfaces, respectively. For example, the audio part of the video conference session could be transferred to a speaker system in the meeting room (not shown) being independent of the TV set 14 and the video part of the video conference session could be transferred to a beamer 18. In order to control the sub-sessions in a suitable way, each of the sub-sessions has to be controlled to an individual interface, one for controlling the speaker system in the meeting room 12 and one for controlling the beamer 18.

According to the embodiment of Figure 3, the user interface for controlling the entire media session remains on the first ambient network comprising the mobile nodes 10 of the user. By means of the ambient network signalling connection 32, 33, a socket interface is established between the transferred part of the data flow of the media session and the part of the media session remaining on the first ambient network.

Moreover, the network composition negotiation information contains information on how the data to be transmitted via this interface is to be protected. In particular, an encryption machine depending on the specific security requirements is negotiated.

Moreover, the network composition information contains information on the compensation for the traffic handling in order to allow for a commercial application in a suitable business scheme. Further, negotiations relating to the Quality of Service are performed.

Upon request of the first ambient network or of the network representing the master network of the media session, the transferred part of the media session is redirected to the media client of the first ambient network. In the above example, if the user leaves the meeting room 12 with his mobile node 10, such a request for redirection is transmitted to the second ambient network and the situation according to Figure 1 is re-established. The redirection is performed during a decomposition procedure.

In the above embodiment, the transferral of at least one function for managing network connections is negotiated in the same composition agreement as the transferral of the part of the multimedia session.

Figure 4 shows a second embodiment of the invention wherein in addition to the bearer endpoints relating to the user data, the signalling connections for session control are redirected to the additional nodes of the composite network 28. To be specific, the session control of the video conference session is transferred to the TV set 14 and the session control of the web browsing session is transferred to the personal computer 16 such that e.g. the web browsing session may be interrupted or stalled using the keyboard of the personal computer 16. In the embodiment of Figure 4, only the redirection control of the different media sessions remains on the mobile node 10 of the user.

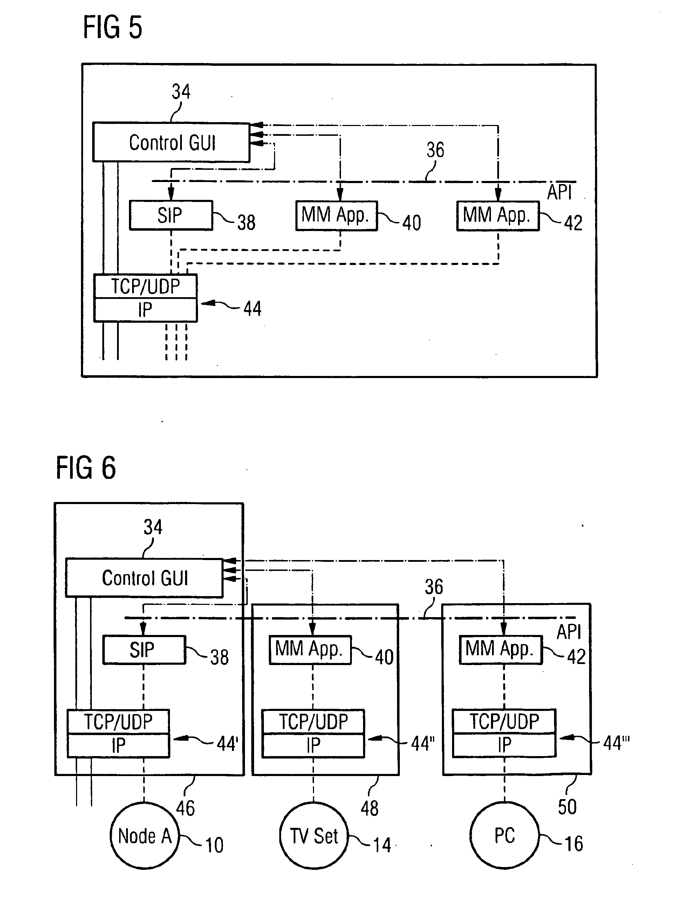

Figure 5 shows schematically a protocol stack of a multimedia session without media split. A control Graphical User Interface 34 (GUI) communicates via a single socket interface 36 formed by an API using a Session Initiation Protocol (SIP) 38 for establishing a communication session between two or more users. The Session Initiation Protocol could be of the type as specified in RFC 3261. The different sub-sessions or multimedia applications 40, 42, e.g. the audio part of the multimedia session and the video part of the multimedia session are controlled via the same socket interface 36. The whole protocol stack is based on a common TCP/UDP-IP protocol stack 44.

Figure 6 shows protocol stacks with different protocol stacks for the individual sub-sessions of a multimedia session allowing a media split. As according to Figure 5, a common control Graphical User Interface 34 (GUI) communicates with a Session Initiation Protocol 38 and two sub-sessions or multimedia applications 40, 42 of the multimedia session. However, the Session Initiation Protocol 38, the multimedia application 40 and the multimedia application 42 are each based on an individual TCP/UDP-IP Protocol stack 44', 44", 44"' such that the data flows relating to different media may be split into more than one parts, namely a control part 46 remaining on the mobile node 10 of the user, a first part 48 being redirected to the TV set 14 and a second part being redirected to the personal computer 16.

With the above described enhancements to the recent ambient network procedures/architecture also a combination of several ongoing sessions is possible. If, for example, the video conference session the user with the mobile node 10 is having with the first peer on the node 24 involves a further user already waiting in the meeting room 12 in the above example where e.g. the further user uses the TV set 14, a camera and a microphone (not shown) as input and output devices for the same video conference, session endpoints corresponding to the mobile node 10 and to the TV set 14 in the meeting room 12 may be combined such that the video conference session involving three session endpoints is automatically reconfigures such that only two session points are involved.

The entering user with the mobile node 10 may use the TV set 14 and the camera and microphone of the user already waiting in the meeting room 12 as input/output devices for the ongoing video session. If the peer 1 on node 24 has followed the video conference on a split screen prior to the network, the corresponding video output of the video conference session could be automatically reconfigured in order to only use one stream for both users in a meeting room 12.

The mobile node 10 of the user is embodied as a single mobile terminal representing a new class of ambient network devices comprising a processor controlling a link for combining a first and a second ambient network at means for exchanging network composition negotiation information between the first and the second ambient network.

The ambient network device of the new class is characterized in that the means for exchanging network composition negotiation information acquires and transmits network composition negotiation information containing information on at least one media session in working input/output requirements of the ongoing media session.

## Claims

1. A method for combining a first and second ambient network wherein network composition negotiation information is exchanged between the first and second ambient network, comprising the steps of:
- automatically detecting a link between the first and second ambient networks,
- establishing a connectivity interface between the ambient networks across the detected links,
- sending the network composition negotiation information containing information on at least one media session involving a media client across the established connectivity interface,
**characterized by**
- splitting of a control part of the at least one media session from a bearer handling part for handling bearers of the media session, wherein at least one bearer endpoint of the media session is split from a session end point of the media session.

2. The method of claim 1, **characterized in that** the information relating to the at least one media session comprises information on media clients involved in the media session.

3. The method of claim 2, **characterized in that** at least a part of the data flow of a media session is redirected from a media client of the first ambient network to a media client of the second ambient network upon agreement on the network composition between the ambient networks.

4. The method according to claim 3, **characterized in that** at least an end point of a media data flow is transferred.

5. The method according to one of the preceding claims, **characterized in that** the network composition negotiation information contains information on the transfer of at least one bearer of the media session.

6. The method according to one of the preceding claims, **characterized in that** the network composition negotiation information contains information on which of the ambient networks will be a master network for the redirection control of the media session.

7. The method according to one of the preceding claims, **characterized in that** the network composition negotiation information contains information on which nodes of at least one of the ambient networks will automatically accept a part of the media session.

8. The method according to claim 7, **characterized in that** individual interfaces, in particular socket interfaces, are provided for each node automatically accepting a part of the media session.

9. The method according to one of the preceding claims, **characterized in that** the media session is a multi-media session containing several subsessions, wherein each of the subsessions is controlled through an individual interface.

10. The method according to one of claims 3 - 9, **characterized in that** a user interface for controlling the media session remains in the first ambient network.

11. The method according to one of claims 3 - 10, **characterized in that** an interface is established between the transferred part of the data flow of the media session and the part of the media session remaining on the first ambient network.

12. The method according to claim 11, **characterized in that** the network composition negotiation information contains information on how the data transmitted via the interface are to be protected.

13. The method according to one of the preceding claims, **characterized in that** the network composition negotiation information contains information on the compensation for the traffic handling.

14. The method according to one of claims 3 - 13, **characterized in that** the transferred part of the media session is redirected to the media client of the first ambient network upon request by the first ambient network.

15. The method according to one of claims 3 - 14, **characterized in that** an audio data stream of the media session is transferred to an audio client of the second ambient network.

16. The method according to one of claims 3 - 15, **characterized in that** a video data stream of the media session is transferred to a video client of the second ambient network.

17. The method according to one of claims 3 - 16, **characterized in that** the transferral of at least one function for managing network connections is negotiated in the same composition agreement as the transferral of the part of the multi-media session.

## Patentansprüche

1. Verfahren zum Kombinieren eines ersten und eines zweiten Umgebungsnetzes, wobei Netzzusammensetzungsverhandlungsinformationen zwischen dem ersten und dem zweiten Umgebungsnetz ausgetauscht werden, das die folgenden Schritte umfasst:
- automatisches Detektieren einer Verbindung zwischen dem ersten und dem zweiten Umgebungsnetz,
- Erstellen einer Verbindungsfähigkeitsschnittstelle zwischen den Umgebungsnetzen über die detektierten Verbindungen,
- Senden der Netzzusammensetzungsverhandlungsinformationen, die Informationen über mindestens eine Mediensitzung, die einen Medien-Client einbezieht, enthalten, über die erstellte Verbindungsfähigkeitsschnittstelle,
**gekennzeichnet durch**
- Abtrennen eines Steuerteils der mindestens einen Mediensitzung von einem Trägerhandhabungsteil zum Handhaben von Trägern der Mediensitzung, wobei mindestens ein Trägerendpunkt der Mediensitzung von einem Sitzungsendpunkt der Mediensitzung getrennt ist.

2. Verfahren nach Anspruch 1, **dadurch gekennzeichnet, dass** die Informationen bezüglich der mindestens einen Mediensitzung Informationen über Medien-Clients umfassen, die in der Mediensitzung einbezogen sind.

3. Verfahren nach Anspruch 2, **dadurch gekennzeichnet, dass** mindestens ein Teil des Datenflusses einer Mediensitzung von einem Medien-Client des ersten Umgebungsnetzes nach einer Vereinbarung über die Netzzusammensetzung zwischen den Umgebungsnetzen zu einem Medien-Client des zweiten Umgebungsnetzes umgeleitet wird.

4. Verfahren nach Anspruch 3, **dadurch gekennzeichnet, dass** mindestens ein Endpunkt eines Mediendatenflusses übertragen wird.

5. Verfahren nach einem der vorhergehenden Ansprüche, **dadurch gekennzeichnet, dass** die Netzzusammensetzungsverhandlungsinformationen Informationen über die Übertragung mindestens eines Trägers der Mediensitzung enthalten.

6. Verfahren nach einem der vorhergehenden Ansprüche, **dadurch gekennzeichnet, dass** die Netzzusammensetzungsverhandlungsinformationen Informationen darüber enthalten, welches der Umgebungsnetze ein Leitnetz für die Umleitungssteuerung der Mediensitzung sein wird.

7. Verfahren nach einem der vorhergehenden Ansprüche, **dadurch gekennzeichnet, dass** die Netzzusammensetzungsverhandlungsinformationen Informationen darüber enthalten, welche Knoten von mindestens einem der Umgebungsnetze automatisch einen Teil der Mediensitzung annehmen werden.

8. Verfahren nach Anspruch 7, **dadurch gekennzeichnet, dass** einzelne Schnittstellen, insbesondere Socket-Schnittstellen, für jeden Knoten bereitgestellt werden, die automatisch einen Teil der Mediensitzung annehmen.

9. Verfahren nach einem der vorhergehenden Ansprüche, **dadurch gekennzeichnet, dass** die Mediensitzung eine Multi-Mediensitzung ist, die mehrere Untersitzungen enthält, wobei jede der Untersitzungen durch eine eigene Schnittstelle gesteuert wird.

10. Verfahren nach einem der Ansprüche 3-9, **dadurch gekennzeichnet, dass** eine Anwenderschnittstelle zum Steuern der Mediensitzung in dem ersten Umgebungsnetz bleibt.

11. Verfahren nach einem der Ansprüche 3-10, **dadurch gekennzeichnet, dass** eine Schnittstelle zwischen dem übertragenen Teil des Datenflusses der Mediensitzung und dem Teil der Mediensitzung, der auf dem ersten Umgebungsnetz verbleibt, erstellt wird.

12. Verfahren nach Anspruch 11, **dadurch gekennzeichnet, dass** die Netzzusammensetzungsverhandlungsinformationen Informationen darüber enthalten, wie die Daten, die über die Schnittstelle übertragen werden, geschützt werden.

13. Verfahren nach einem der vorhergehenden Ansprüche, **dadurch gekennzeichnet, dass** die Netzzusammensetzungsverhandlungsinformationen Informationen über den Ausgleich der Verkehrshandhabung enthalten.

14. Verfahren nach einem der Ansprüche 3-13, **dadurch gekennzeichnet, dass** der übertragene Teil der Mediensitzung auf Anforderung durch das erste Umgebungsnetz an den Medien-Client des ersten Umgebungsnetzes weitergeleitet wird.

15. Verfahren nach einem der Ansprüche 3-14, **dadurch gekennzeichnet, dass** ein Audiodatenstrom der Mediensitzung an einen Audio-Client des zweiten Umgebungsnetzes übertragen wird.

16. Verfahren nach einem der Ansprüche 3-15, **dadurch gekennzeichnet, dass** ein Videodatenstrom der Mediensitzung an einen Video-Client des zweiten Umgebungsnetzes übertragen wird.

17. Verfahren nach einem der Ansprüche 3-16, **dadurch gekennzeichnet, dass** die Übertragung der mindestens einen Funktion zum Managen der Netzverbindungen in der gleichen Zusammensetzungsvereinbarung verhandelt wird wie die Übertragung des Teils der Multi-Mediensitzung.

## Revendications

1. Un procédé de combinaison d'un premier et d'un deuxième réseaux ambiants dans lequel des informations de négociation de composition de réseau sont échangées entre les premier et deuxième réseaux ambiants, comprenant les étapes suivantes :
- la détection automatique d'une liaison entre les premier et deuxième réseaux ambiants,
- l'établissement d'une interface de connectivité entre les réseaux ambiants sur les liaisons détectées,
- l'envoi des informations de négociation de composition de réseau contenant des informations relatives à au moins une session multimédia impliquant un client multimédia sur l'interface de connectivité établie,
**caractérisé par**
- la division d'une partie de commande de la au moins une session multimédia à partir d'une partie de gestion de support pour la gestion de supports de la session multimédia, au moins un point d'extrémité de support de la session multimédia étant divisé à partir d'un point d'extrémité de session de la session multimédia.

2. Le procédé selon la revendication 1, **caractérisé en ce que** les informations relatives à la au moins une session multimédia comprennent des informations relatives à des clients multimédias impliqués dans la session multimédia.

3. Le procédé selon la revendication 2, **caractérisé en ce qu'**au moins une partie du flux de données d'une session multimédia est réacheminée à partir d'un client multimédia du premier réseau ambiant vers un client multimédia du deuxième réseau ambiant après accord concernant la composition de réseau entre les réseaux ambiants.

4. Le procédé selon la revendication 3, **caractérisé en ce qu'**au moins un point d'extrémité d'un flux de données multimédias est transféré.

5. Le procédé selon l'une quelconque des revendications précédentes, **caractérisé en ce que** les informations de négociation de composition de réseau contiennent des informations relatives au transfert d'au moins un support de la session multimédia.

6. Le procédé selon l'une quelconque des revendications précédentes, **caractérisé en ce que** les informations de négociation de composition de réseau contiennent des informations relatives au réseau des réseaux ambiants qui sera un réseau maître pour la commande de réacheminement de la session multimédia.

7. Le procédé selon l'une quelconque des revendications précédentes, **caractérisé en ce que** les informations de négociation de composition de réseau contiennent des informations relatives aux noeuds des noeuds d'au moins un des réseaux ambiants qui accepteront automatiquement une partie de la session multimédia.

8. Le procédé selon la revendication 7, **caractérisé en ce que** des interfaces individuelles, plus particulièrement des interfaces de connexion, sont fournies pour chaque noeud acceptant automatiquement une partie de la session multimédia.

9. Le procédé selon l'une quelconque des revendications précédentes, **caractérisé en ce que** la session multimédia est une multi-session multimédia contenant plusieurs sous-sessions, chacune des sous-sessions étant commandée par l'intermédiaire d'une interface individuelle.

10. Le procédé selon l'une quelconque des revendications 3 à 9, **caractérisé en ce qu'**une interface utilisateur destinée à la commande de la session multimédia demeure dans le premier réseau ambiant.

11. Le procédé selon l'une quelconque des revendications 3 à 10, **caractérisé en ce qu'**une interface est établie entre la partie transférée du flux de données de la session multimédia et la partie de la session multimédia demeurant dans le premier réseau ambiant.

12. Le procédé selon la revendication 11, **caractérisé en ce que** les informations de négociation de composition de réseau contiennent des informations relatives à la manière dont les données transmises par l'intermédiaire de l'interface doivent être protégées.

13. Le procédé selon l'une quelconque des revendications précédentes, **caractérisé en ce que** les informations de négociation de composition de réseau contiennent des informations relatives à la compensation de la gestion de trafic.

14. Le procédé selon l'une quelconque des revendications 3 à 13, **caractérisé en ce que** la partie transférée de la session multimédia est réacheminée vers le client multimédia du premier réseau ambiant sur une demande effectuée par le premier réseau ambiant.

15. Le procédé selon l'une quelconque des revendications 3 à 14, **caractérisé en ce qu'**un flux de données audio de la session multimédia est transféré vers un client audio du deuxième réseau ambiant.

16. Le procédé selon l'une quelconque des revendications 3 à 15, **caractérisé en ce qu'**un flux de données vidéo de la session multimédia est transféré vers un client vidéo du deuxième réseau ambiant.

17. Le procédé selon l'une quelconque des revendications 3 à 16, **caractérisé en ce que** le transfert d'au moins une fonction de gestion de connexions de réseau est négocié au cours du même accord de composition que le transfert de la partie de la multi-session multimédia.
